Europäisches Patentamt

European Patent Office

Office européen des brevets

(11) Numéro de publication: **0 274 933 B1**

(12) **FASCICULE DE BREVET EUROPEEN**

(45) Date de publication de fascicule du brevet: **15.07.92**

(51) Int. Cl.⁵: **H01R 13/523**, E21B 23/00, E21B 23/04, E21B 17/02

(21) Numéro de dépôt: **87402765.9**

(22) Date de dépôt: **04.12.87**

(54) **Ensemble permettant une liaison électrique à travers une conduite formée de plusieurs éléments, méthode pour sa mise en place à l'intérieur de cette conduite.**

(30) Priorité: **05.12.86 FR 8617174**
**05.12.86 FR 8617175**

(43) Date de publication de la demande:
**20.07.88 Bulletin 88/29**

(45) Mention de la délivrance du brevet:
**15.07.92 Bulletin 92/29**

(84) Etats contractants désignés:
**DE GB IT NL**

(56) Documents cités:
EP-A- 0 099 805   US-A- 3 167 122
US-A- 3 217 282   US-A- 3 326 293
US-A- 3 409 079   US-A- 3 419 080
US-A- 3 477 506   US-A- 3 518 608
US-A- 4 445 734

(73) Titulaire: **INSTITUT FRANCAIS DU PETROLE**
**4, Avenue de Bois Préau**
**F-92502 Rueil-Malmaison(FR)**

(72) Inventeur: **Chevalier, André**
**5, avenue du 8 mai 1945**
**F-93500 Pantin(FR)**
Inventeur: **Morin, Pierre**
**113, rue Danton**
**F-92300 Levallois(FR)**
Inventeur: **Chardin, Michel**
**6, rue Beatrix Dussane**
**F-75015 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un ensemble permettant de réaliser au moins une liaison électrique entre deux points à travers une conduite, une telle liaison électrique pouvant servir, entre autres, à l'alimentation de certains appareils à partir d'une source électrique, ou à la transmission d'informations codées sous forme de signaux électriques.

Cet ensemble peut être utilisé, par exemple, dans un train de tiges de forage. Il pourra alors transmettre certaines informations, codées électriquement, a partir du fond du puits, telles que, par exemple, la direction du puits, les contraintes mécaniques exercées sur certaines pièces, la température, la pression, etc...

Des solutions visant à atténuer certains inconvénients des dispositifs selon l'art antérieur, tels qu'illustrés par les brevets américains 2.096.359, 3.696.332 et 3.879.097, ont été proposées par la demanderesse dans le brevet français 2.530.876 ou EP 099 805 concernant un ensemble de liaison électrique comportant deux connecteurs fixés aux deux extrémités d'un élément de conduite et d'un connecteur double coopérant avec lesdits deux connecteurs. Cependant à l'usage, ces solutions ont fait apparaître de nouveaux inconvénients, comme la nécessité d'usinage des éléments de conduite, la fragilité mécanique des connecteurs d'extrémités d'éléments de conduite, l'isolement électrique précaire des contacts terminaux ou intermédiaires, l'usure de pièces non interchangeables, les difficultés de démontage, les gènes au montage, les coûts de fabrication.

Ces inconvénients sont supprimés, ou tout au moins très sensiblement atténués, par l'utilisation du dispositif selon l'invention.

Ce dispositif comprend un ensemble permettant de réaliser au moins une liaison électrique à travers une conduite formée d'éléments fixés les uns aux autres, où chaque élément possède une première et une deuxième extrémités, adaptées à coopérer mécaniquement avec les extrémités complémentaires des éléments voisins. Cet ensemble comprend en combinaison par élément de conduite :

- un conducteur placé à l'intérieur de l'élément,
- un premier connecteur simple fixé à une extrémité du conducteur qui est maintenu dans la première extrémité de l'élément de conduite et qui coopère électriquement avec ladite extrémité dudit conducteur,
- un deuxième connecteur simple fixé à l'autre extrémité du connecteur qui est maintenu dans la deuxième extrémité de l'élément de conduite et qui coopère électriquement avec ladite autre extrémité dudit conducteur,
- un premier connecteur double possédant une première extrémité qui comprend au moins un contact annulaire et une deuxième extrémité comportant au moins un contact relié électriquement au précédent, la première extrémité du premier connecteur double coopérant électriquement avec le premier connecteur simple, la deuxième extrémité du premier connecteur double coopérant électriquement avec une deuxième extrémité d'un deuxième connecteur double d'un élément de conduite voisin,
- un deuxième connecteur double identique audit deuxième connecteur double d'un élément de conduite voisin, possédant une première extrémité qui comprend au moins un contact annulaire, et une deuxième extrémité comportant au moins un contact relié électriquement au précédent, la première extrémité du deuxième connecteur double coopérant électriquement avec le deuxième connecteur simple,
- lesdits connecteurs doubles étant éventuellement extractibles et ladite coopération électrique entre lesdits connecteurs doubles se faisant par lesdits contacts annulaires, et
- des moyens de positionnement et de fixation des connecteurs simples.

Le premier et/ou le deuxième connecteur simple pourront comporter une couronne radialement déformable et des moyens de déformation de ladite couronne permettant l'ancrage de la couronne dudit connecteur avec les extrémités de l'élément de conduite.

Les moyens de déformation pourront comporter une goupille possédant sur une certaine longueur une forme conique coopérant avec un alésage placé dans l'épaisseur de ladite couronne, la couronne étant fendue dans toute son épaisseur sur une partie au moins de sa longueur.

Un connecteur double associé à un connecteur simple pourra comporter des moyens de centrage et de retenue en translation par rapport au connecteur.

Les moyens de centrage et de retenue pourront comporter un alésage muni d'une gorge coopérant avec une douille munie d'au moins une griffe élastique.

Le connecteur double et le connecteur simple associé pourront comporter des moyens d'orientation de l'un par rapport à l'autre, tels une clavette portée par le connecteur double, la clavette coopérant avec une rainure située dans ledit connecteur simple.

Entre le connecteur simple et le connecteur double associé, la liaison électrique pourra comporter un contacteur électrique, tel un monocontacteur, comportant deux éléments complémentaires adaptés à réaliser une connexion électrique, chacun des éléments étant disposé à la périphérie du connecteur simple et du connecteur double associé, les axes des éléments étant confondus et parallèles à l'axe de l'ensemble, les deux éléments du contacteur coopérant électriquement lors de la fixation du connecteur double associé.

La deuxième extrémité du premier connecteur double pourra comporter un contact annulaire extérieur, et la deuxième extrémité du deuxième connecteur double pourra comporter un contact annulaire intérieur, chacun des deux contacts porté par chacune des extrémités étant adapté à coopérer électriquement avec les contacts portés par les extrémités complémentaires des éléments voisins.

L'une ou l'autre des deuxièmes extrémités des connecteurs doubles pourra comporter un racleur permettant un essuyage et une étanchéité du contact électrique entre les deux extrémités.

L'une au moins des deuxièmes extrémités de l'un des connecteurs doubles pourra comporter un support dudit contact annulaire, ledit support est réalisé en élastomère et comporte un élément de renfort.

L'une au moins des extrémités d'un élément de ladite conduite pourra comporter une cavité intérieure à ladite conduite et extérieure à la deuxième extrémité d'un connecteur double, et pourra comporter une liaison hydraulique reliant ladite cavité à l'intérieur du connecteur double, cette liaison hydraulique étant adaptée à réaliser l'équilibrage hydraulique de la connexion entre deux éléments de conduite voisins.

Les deux surfaces en contact délimitées par la connexion de la deuxième extrémité du premier connecteur double avec la deuxième extrémité du deuxième connecteur double de l'élément de conduite voisin, pourront être réalisées dans des matériaux adaptés à résister à l'usure.

Le conducteur pourra être maintenu à l'intérieur de l'élément de conduite par un support.

Les extrémités du support pourront être fixées aux premier et deuxième connecteurs simples.

La présente invention concerne en outre un procédé pour mettre en place dans une position déterminée une pièce comportant un conducteur, tel qu'un conducteur électrique, sur une partie de la surface intérieure d'une conduite. Ce procédé permet la mise en place de l'ensemble.

D'autres buts et avantages de la présente invention apparaîtront à la lecture de la description d'un exemple plus particulièrement appliqué aux tiges de forage, donné à titre illustratif mais non limitatif se référant aux dessins annexés où :
- la figure 1 représente un puits de forage,
- la figure 2A à 2C montre deux éléments d'une conduite équipés de l'ensemble de connexion et réunis entre eux,

- la figure 3 illustre une section du premier connecteur double amovible,
- les figures 4A à 4G illustrent différentes coupes de l'ensemble référencé à la figure 2.
- la figure 5 schématise le procédé de mise en place de la ligne électrique.

Afin de faciliter la compréhension de l'exemple simplifié qui suit, le type des différents connecteurs a été fixé. Ainsi, le premier connecteur simple est identique au deuxième connecteur simple, le premier connecteur double a une première extrémité mâle coopérant avec le premier connecteur simple et une deuxième extrémité mâle, le deuxième connecteur double a une première extrémité mâle coopérant avec le deuxième connecteur simple et une deuxième extrémité femelle adaptée à coopérer avec la deuxième extrémité mâle du premier connecteur double d'un élément de conduite voisin.

Le premier connecteur double sera dit connecteur double mâle et le deuxième connecteur double sera dit connecteur double femelle.

La figure I représente une réalisation selon l'invention, appliquée à un train de tiges de forage 1. Le puits est désigné par la référence 2. La référence 3 désigne un outil de forage qui peut être remplacé par un outil quelconque, ou par une sonde de mesure. La jonction entre les différents éléments composant le train de tiges de forage n'a pas été représenté.

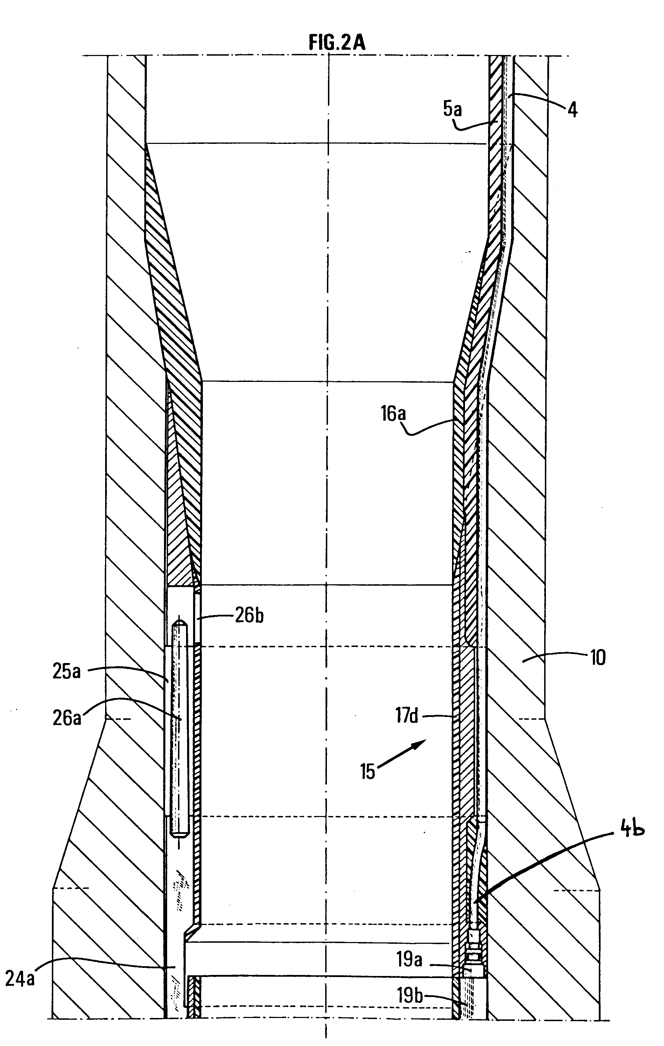

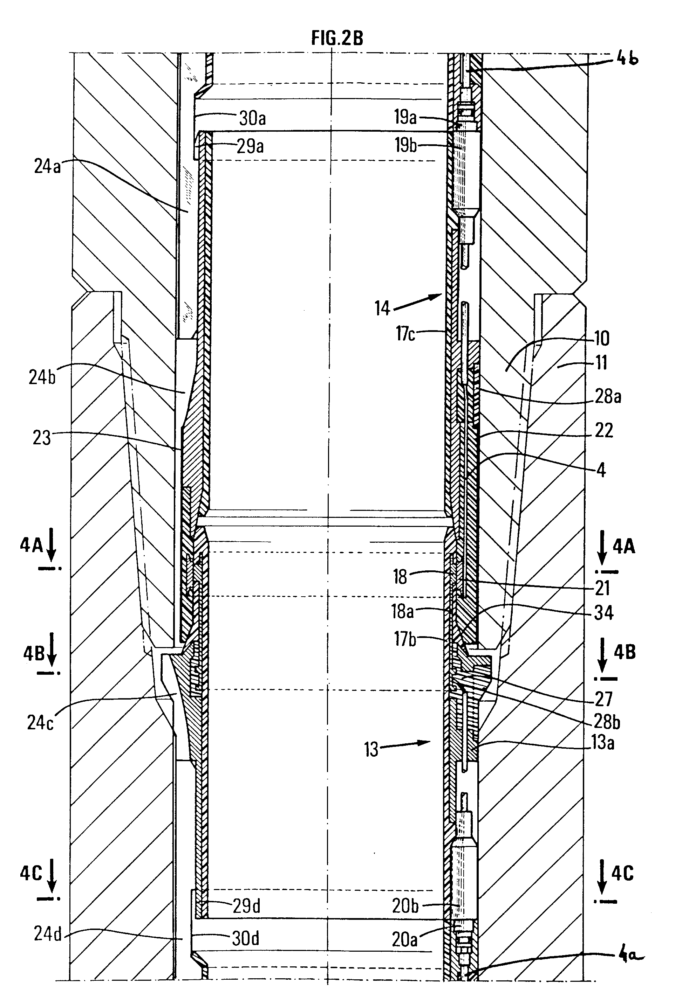

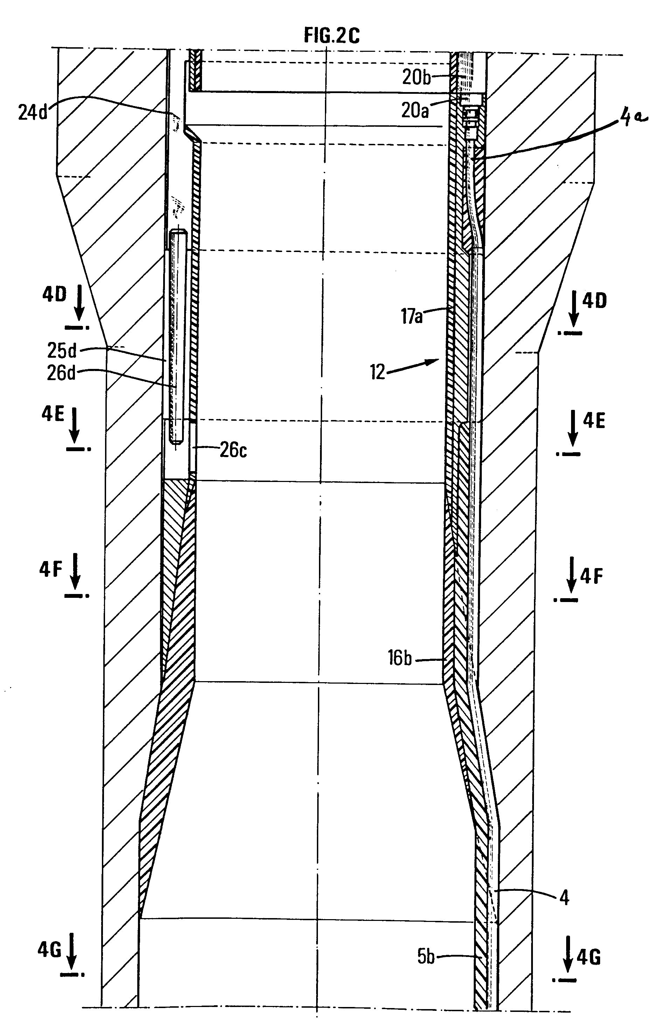

Un exemple de cette jonction est représenté à la figure 2.

Il est bien entendu possible dans certains cas de se servir de la colonne de forage, ou même de la terre ou des boues, comme milieu conducteur de l'électricité. Ceci permet de réaliser un circuit électrique en n'utilisant qu'un seul conducteur électrique isolé dans le support. C'est d'ailleurs le cas d'un seul conducteur qui sera décrit en détail ci-après, mais l'invention est également applicable au cas de plusieurs conducteurs.

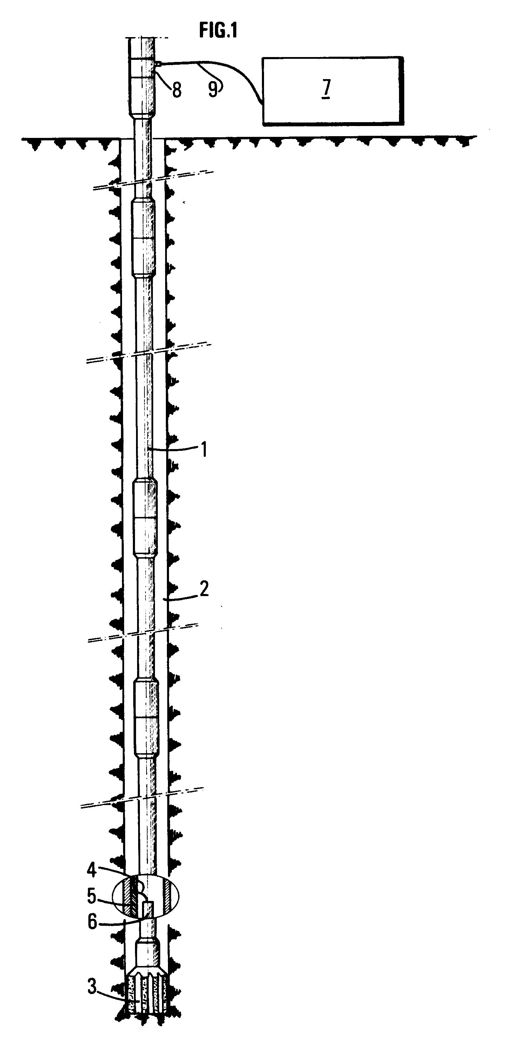

Dans le cas de la figure 1, le conducteur électrique 4 est noyé dans la masse d'un support 5 interne à la conduite. Le conducteur électrique 4 peut être équipé de sa propre isolation, notamment si le support 5 n'est pas suffisamment isolant électriquement.

Dans le cas illustré par la figure 1, le conducteur 4 relie un appareillage 6 à une installation de surface 7, ces deux ensembles coopèrent électriquement entre eux. Il est possible d'utiliser l'ensemble permettant une liaison électrique selon l'invention, alors même que la tige de forage tourne. Pour ce faire, il est nécessaire de disposer d'au moins un contact tournant. Celui-ci peut être constitué, par exemple, par une bague 8 coopérant électriquement avec un contact 9. De tels dispositifs étant connus de l'art antérieur, ne seront pas détaillés dans la présente description.

La figure 2 représente la jonction entre deux éléments adjacents d'une conduite, chacun de ces éléments étant équipé de différentes pièces permettant la liaison électrique. Sur cette figure, les deux éléments de la conduite sont vissés l'un à l'autre. L'invention est applicable à tout type de liaison par vissage ou autrement, dés l'instant où l'opération de liaison des différents éléments entre eux fait appel à au moins un déplacement axial.

Le côté mâle 10 d'un élément de conduite est vissé au côté femelle 11 de l'élément de conduite voisin. Les références 5a et 5b désignent respectivement le support contenant le conducteur électrique du côté mâle d'un élément de conduite, et du côté femelle de l'élément voisin. La référence 4b désigne l'extrémité du conducteur 4 côté mâle.

L'ensemble de connexion comporte, en plus du support, un premier connecteur simple 12, un connecteur double mâle 13, un connecteur double femelle 14, un deuxième connecteur simple 15, ainsi que des moyens de fixation.

La liaison mécanique entre le premier connecteur simple 12 et le support 5b, ou entre le deuxième connecteur simple 15 et le support 5a peut être réalisée, selon la nature des matériaux utilisés, tels des élastomères, des matériaux thermodurcissables ou thermoplastiques, par vulcanisation, réticulation, soudage, coulée moulage ou tout autre moyen, respectivement 16a et 16b, après que l'on ait procédé à la connexion électrique des extrémités 4a et 4b du fil conducteur 4 logé dans le support 5a et 5b avec respectivement les conducteurs des connecteurs simples 12 et 15.

On pourra réaliser les liaisons mécaniques 16a et 16b autrement en immobilisant l'extrémité du support dans le connecteur simple sans avoir recours au matériau et à la forme conique de la liaison 16b.

On pourra par exemple réaliser à la périphérie du connecteur simple une entaille ajustée permettant l'introduction du support dans celle-ci.

La forme conique permettant un raccordement progressif des sections pourra alors être obtenue par un usinage dans le connecteur simple.

La surface intérieure de chacun des connecteurs simples ou doubles 12, 13, 14, 15, peut être recouverte d'une couche de protection contre les avaries telles que : corrosion, érosion, (abrasion, cavitation...), respectivement 17a, 17b, 17c, 17d. Cette couche de protection pourra être constituée dans le même matériau que celui utilisé pour la liaison mécanique entre les connecteurs simples 12 et 15 et leur support. Elle pourra être avantageusement constituée par un élastomère.

Le raccord double mâle 13 qui comporte un contact annulaire extérieur 18 relié au conducteur 4 par une douille élastique conductrice 18a sera recouvert, au moins sur les parties électriques de la douille devant être isolées, par un matériau élastique et isolant tel qu'un élastomère. La couche protectrice de ce raccord qui doit être élastique, au moins au niveau de la douille élastique, pourra être avantageusement réalisée dans le même matériau que celui utilisé pour l'isolation électrique de la douille.

Les liaisons électriques de deux éléments de conduite voisins entre le premier ou le deuxième connecteur et leur connecteur double associé est réalisée au moyen d'un couple de fiches électriques d'axe parallèle à celui des éléments de la conduite.

Ce couple de fiches adapté à résister aux liquides sous de hautes pressions, telles que celles rencontrées dans les puits de forage, est par exemple un couple de fiches Duo-seel, qui est une marque déposée de la Société kemlon.

Les fiches mâles 19a, 20a sont respectivement vissées sur les connecteurs simples 12 et 15, alors que les fiches femelles 19b et 20b associées sont fixées, par encastrement en tout autre moyen approprié, au connecteur double associé respectivement 13 et 14.

Les fiches mâles pourraient sans inconvénient être interverties avec les fiches femelles.

Les fiches mâle 19a et 20a sont reliées électriquement respectivement aux conducteurs électriques de chacun des éléments de conduite connectés.

L'isolation des parties conductrices d'électricité (conducteurs, liaisons entre les fiches mâles 19a et 20a et ces conducteurs, etc) est réalisée par le fait qu'elles sont noyées dans un matériau isolant, tel une résine ou une matière stabilisable.

Les fiches mâles 19a et 20a pourront ne pas être reliées directement aux conducteurs électriques. En effet, pour certains cas d'utilisation intensive du matériel où les risques d'endommagement des fiches mâles 19a et/ou 20a sont accrus, on peut terminer les conducteurs électriques par des fiches femelles supplémentaires et relier les fiches mâles 11a et 20a à des fiches mâles supplémentaires du même type que ces dernières. Les fiches mâles 11a et 20a ainsi que les électriques par des fiches femelles supplémentaires et relier les fiches mâles 11a et 20a à des fiches supplémentaires du même type que ces dernières. Les fiches mâles 11a et 20a ainsi que les fiches mâles supplémentaires coopèrent électriquement entre elles et sont placés chacunes par couple à chacune des extrémités d'un tube étanche. Le tube étant démontable, peut être changé lorsque celui-ci est défectueux.

La fiche femelle du connecteur double mâle est reliée par la douille conductrice 18a au contact annulaire extérieur 18 et la fiche femelle du connecteur double femelle est reliée au contacteur annulaire intérieur 21 par un conducteur de liaison. Ces deux contacteurs annulaires 18 et 21 coopèrent entre eux pour réaliser la liaison électrique entre deux éléments de conduite voisins.

Le contacteur annulaire intérieur 21 et une partie de l'élément conducteur réalisant la liaison électrique entre ledit contacteur et la fiche femelle dudit connecteur double femelle 14, sont rigidement fixés audit connecteur double au moyen d'un support en résine époxy 22 noyant ledit contacteur 21 et ladite partie de l'élément conducteur de liaison.

La résine est adaptée pour résister aux hautes pressions et assurer l'isolation électrique des parties de la douille et du conducteur de liaison qui pourraient être dénudées.

Le support 22 est rigidifié par une frette 23 adaptée à résister aux brusques variations différentielles de pression entre l'intérieur de la conduite et l'extérieur du connecteur double femelle. En effet, les conduites, notamment celles utilisées en forage ou production d'effluents souterrains, sont souvent soumises à des ondes de choc mécaniques ou hydrauliques, tels des coups de bélier, qui peuvent engendrer des détériorations fatales, notamment au niveau de la connexion des deux connecteurs doubles entre eux.

Pour obvier ces inconvénients et permettre l'équilibrage des parties connectées au moment de leur connexion (une surpression à l'extérieur des deuxièmes extrémités des connecteurs doubles pourrait produire l'endommagement de leurs extrémités). La connexion entre le raccord double mâle et le raccord double femelle est équilibrée de part et d'autre de son épaisseur par le canal latéral 24a, 24b, 24c, 24d de dimensions adaptées notamment pour réduire les effets des ondes de choc et éviter des bouchages.

Ce canal latéral débouche dans l'espace intérieur en deux points aux niveaux des jointures entre les connecteurs simples 12 et 15 et les connecteurs doubles respectivement 13 et 14. Le canal qui traverse un espace annulaire (zone comprise entre les éléments de conduite 10 et 11 et les deuxièmes extrémités des connecteurs doubles 13 et 14) comporte des rainures 24a et 24d pratiquées dans les connecteurs 12 et 15 et des rainures 24b et 24c pratiquées dans les connecteurs doubles 13 et 14.

Les deux rainures 24b et 24c débouchent dans l'espace annulaire entourant les deux deuxièmes extrémités connectées des deux connecteurs doubles.

Ces rainures 24a et 24d des connecteurs débouchent dans des rainures 24b et 24c respectivement pratiquées dans le connecteur double femelle et le connecteur double mâle.

Ces rainures 24a et 24d sont les continuations des fentes de dilatation 25a et 25d des connecteurs 12 et 15.

On aurait pu réaliser l'équilibre hydraulique des deux deuxièmes extrémités connectées en utilisant, au lieu d'un canal latéral débouchant en amont et en aval de deux deuxièmes extrémités, un canal borgne dont l'extrémité fermée d'une part atteint ledit espace annulaire et d'autre part débouche à l'intérieur de la conduite. Cependant, le canal latéral est le mode d'équilibrage préféré pour les applications au forage.

Le premier connecteur simple comme le deuxième connecteur simple sont solidarisés aux extrémités des éléments de conduite dans lesquelles ces connecteurs sont logés par expansion des connecteurs, au moyen chacun d'une goupille conique 26a, 26d coopérant avec un alésage placé dans une fente 25a, 25d.

Correctement positionnés à l'intérieur des éléments de conduite, les connecteurs simples sont ensuite immobilisés par dilatation de leur alésage au moyen des goupilles coniques enfoncées depuis l'extrémité de la conduite.

Ces connecteurs simples peuvent être enlevés par décoincement des goupilles 26a et 26d, par exemple au moyen d'un outil crochu pénétrant dans la partie intérieure 26b et 26c d'une fente d'expansion. Le placement des connecteurs est aisé et ne nécessite pas d'usinage particulier. Leur enlèvement facile n'endommage pas les éléments de conduite.

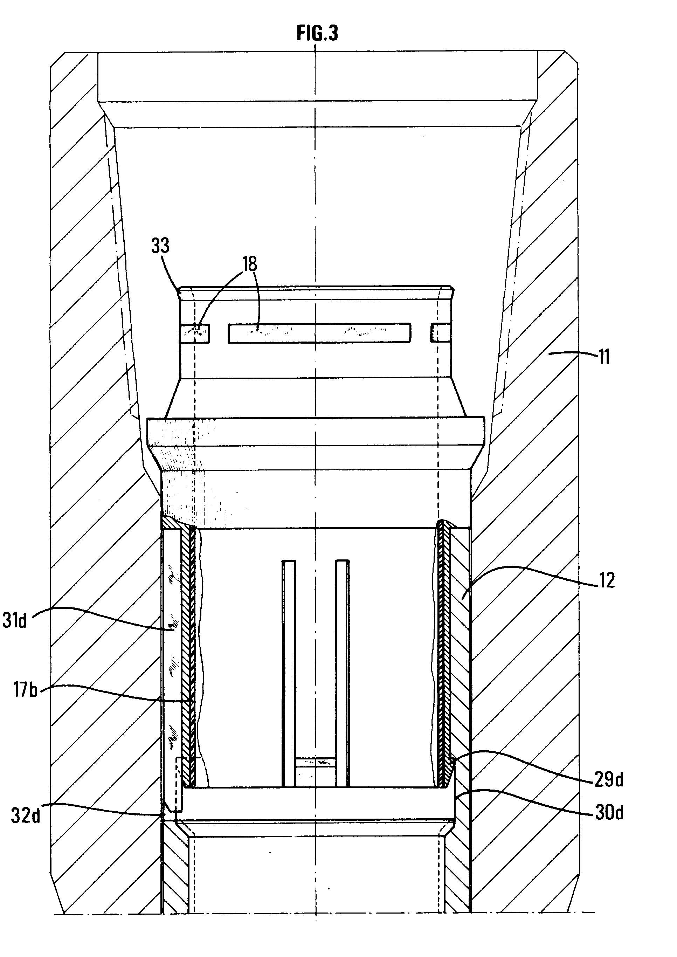

Le connecteur double mâle et le connecteur double femelle sont respectivement positionnés en rotation sur le premier connecteur simple et le deuxième connecteur simple chacun au moyen d'une clavette 31d (fig. 3) portée par les deux connecteurs doubles et coopérant avec une rainure 32d débouchante placée dans les connecteurs simples associés. Ce positionnement en rotation permet l'enfichage et empêche la déformation en service des couples de fiches 19a, 19b et 20a, 20b.

Les deux connecteurs doubles sont immobilisés par rapport au premier et au deuxième connecteurs simples au moyen d'une douille 29a, 29d munie d'au moins une griffe élastique coopérant avec une gorge 30a, 30d placée à l'intérieur des connecteurs associés.

L'enlèvement de cette ou ces griffes pour l'enlèvement du connecteur double, par exemple pour son remplacement lorsqu'il est détérioré (usure, ...), peut être possible au moyen d'un outil adapté.

Le support 22 du contacteur annulaire intérieur, ou le support 27 de la douille conducteur 18a respectivement sur les connecteurs doubles femelles et mâles, qui sont réalisés en matériau rigide réticulable, sont coulés par injection par les orifices 28a et 28b à l'aide d'un moule.

La deuxième extrémité du connecteur double mâle comporte une lèvre 33 (fig. 3) élastique annulaire servant à essorer le contact 21 et à assurer l'étanchéité du compartiment contenant les contacts 18 et 21.

Au cours de la connexion, le chanfrein 34 permet l'essorage du contact 18 par déformation de la deuxième extrémité (mâle) du connecteur double mâle.

L'élasticité de la douille conductrice 18a, ainsi que le revêtement élastomérique de celle-ci au voisinage du contacteur annulaire extérieur 18 sur la partie coopérant avec la deuxième extrémité du connecteur femelle, assurent une conformation des deux deuxièmes extrémités des deux connecteurs doubles et permettent la réalisation d'une connexion étanche et électriquement isolante vis à vis de l'extérieur du conducteur.

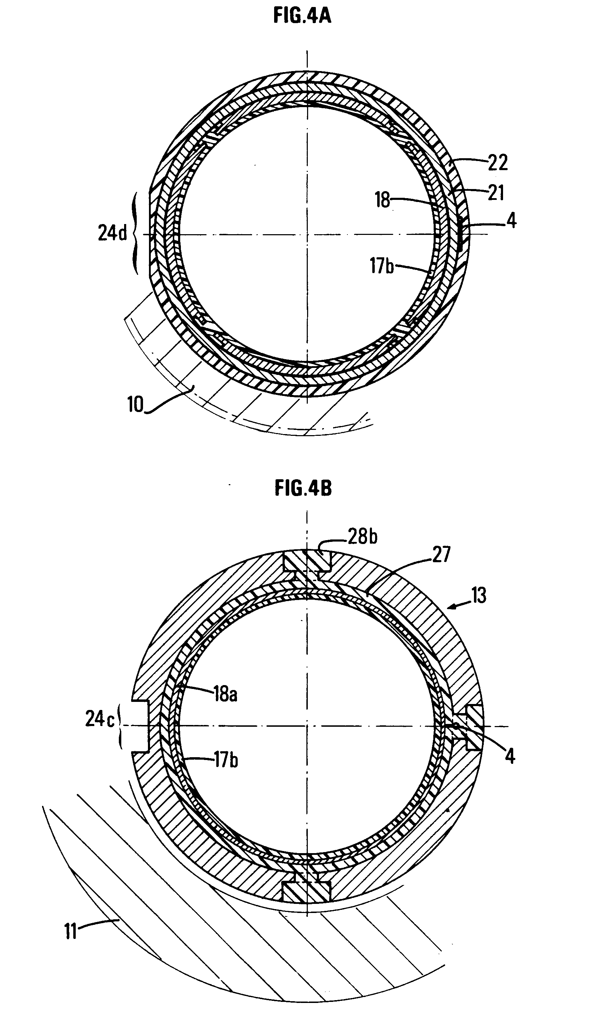

La figure 4A illustre une section des connecteurs doubles au droit des contacts 18 et 21 des connecteurs doubles. La douille conductrice 18a est divisée, sur au moins la longueur de contact entre les deux connecteurs doubles, en quatre secteurs entre lesquels est placé un matériau élastomérique isolant électrique. Ces secteurs élastiques sont déformés lors de la connexion et coopèrent avec le contact annulaire 21 du connecteur double femelle pour assurer une certaine pression sur les contacts 18 et 21 de chacune des deuxièmes extrémités des deux connecteurs doubles.

L'adaptation des rigidités, des matériaux et des formes, de l'extrémité femelle du connecteur double femelle et de la deuxième extrémité du connecteur double mâle permet d'obtenir que la connexion électrique et son isolation ne puissent pas être endommagées lorsque la conduite est soumise à la pression hydraulique.

La figure 4B montre une section du connecteur double mâle au droit de l'ancrage de la douille conductrice dans le corps rigide 13a du connecteur double mâle. Le corps 13a comporte la rainure 24c permettant l'équilibrage des pressions de part et d'autre des organes permettant la connexion. L'extrémité opposée au contacteur 18 de la douille conductrice 18a est fixée au corps 13a au moyen d'un matériau thermodurcissable isolant 27, tel une résine diélectrique, qui peut être injecté dans le corps par les orifices d'injection 28b. L'intérieur de la douille 18a est revêtu d'une couche 17b isolante et résistante à l'abrasion par exemple réalisée en matériau élastomérique.

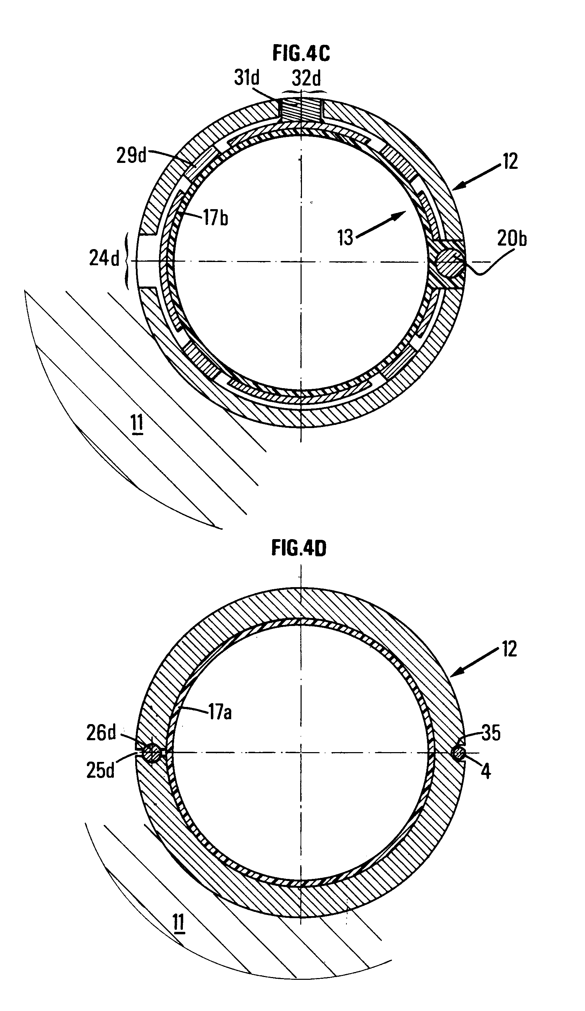

La figure 4C représente une section du premier connecteur coopérant avec la première extrémité du connecteur double mâle au niveau des quatre griffes 29d et de la gorge 30d d'immobilisation en translation. Le revêtement élastomérique intérieur 17b antiabrasion du connecteur double mâle assure aussi l'immobilisation de la fiche femelle 20b, laquelle fiche coopère avec la fiche mâle 20a (fig.

2) portée par le premier connecteur simple. Le premier connecteur 12 est pourvu d'une rainure 32d coopérant avec la clavette 32d permettant d'immobiliser en rotation le premier connecteur simple par rapport au premier connecteur double. Ces moyens d'immobilisation 29d, 30d, 31d, 32d sont identiques à ceux utilisés pour immobiliser le deuxième connecteur simple avec le deuxième connecteur double. Le premier connecteur simple comporte une rainure 24d réalisant une partie du canal d'équilibrage hydraulique de la connexion.

La figure 4D illustre une section du premier connecteur simple au niveau de la goupille conique de dilatation.

La goupille 26d coopère avec un alésage pour assurer l'écartement de la fente 25d et de ce fait le coincement du connecteur simple dans l'élément de conduite entourant le connecteur. Le conducteur est isolé et placé dans une gorge 35 usinée dans le premier connecteur simple.

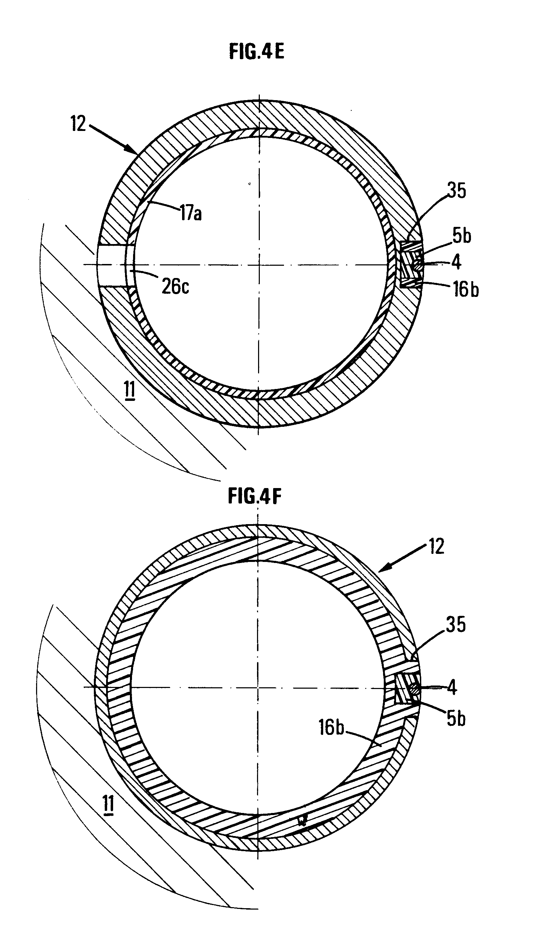

La figure 4E est une section du premier connecteur simple au niveau de l'extrémité du support de conducteur.

Entre les connecteurs simples placés à chacune des extrémités d'un même élément de conduite, le conducteur électrique 4 est placé dans un support 5b ou 5a. Ce support est adapté à adhérer à la surface intérieure de l'élément de conduite.

Les extrémités de ce support sont équarries pour être placées dans la gorge 35 élargie du premier et deuxième connecteurs de l'élément de conduite de manière à ne pas produire de discontinuité du support 5b fragilisant le conducteur 4.

L'espace interstitiel défini par le support équarri et la gorge élargie 35 est rempli d'élastomère pour assurer l'immobilisation du support dans la rainure. Cet espace aurait pu aussi être rempli par tout matériau adapté tel un matériau réticulable, ou aurait pu ne pas exister, dans la mesure où le support équarri comblait toute la gorge 35.

Diamètralement opposée à la gorge 35, est placée la goupille conique 26d coopérant avec un alésage pour assurer l'ancrage du premier connecteur.

La figure 4F montre une section du premier connecteur simple et de la liaison mécanique du support avec ledit connecteur au niveau de ladite liaison.

Ladite liaison 16b est en contact sur toute sa circonférence avec le connecteur 12 et maintient le support équarri dans la gorge 25 traversant toute l'épaisseur du connecteur au niveau de la section FF. La liaison 16b comme toutes les liaisons mécaniques des connecteurs avec le support 5 peut être réalisée en matériau antiabrasion tel un élastomère. La forme intérieure de la liaison est adaptée à éviter un décollement de l'écoulement qui serait causé pas la brusque variation de section intérieure de la conduite entre les connecteurs et la partie extérieure aux connecteurs.

Cette variation de section est obtenue par une faible conicité intérieure de la liaison. La conicité de la liaison 16b se prolonge jusqu'à ce que son diamètre intérieur soit égal à son diamètre extérieur ou au diamètre intérieur de l'élément de conduite.

Le support 5b du conducteur 4 traverse (fig. 2) la liaison mécanique 16b tout en s'y accrochant.

Dans l'exemple de réalisation préféré selon l'invention illustré par les figures annexées, le support 16b ne possède qu'une largeur réduite, mais celui-ci pourrait, tout en maintenant le conducteur 4, recouvrir tout l'intérieur de l'élément de conduite. Une telle disposition, qui a l'inconvénient de réduire la section de passage de la conduite, aurait notamment pour avantage de protéger la surface intérieure de la conduite de l'usure résultant d'une abrasion ou d'une érosion.

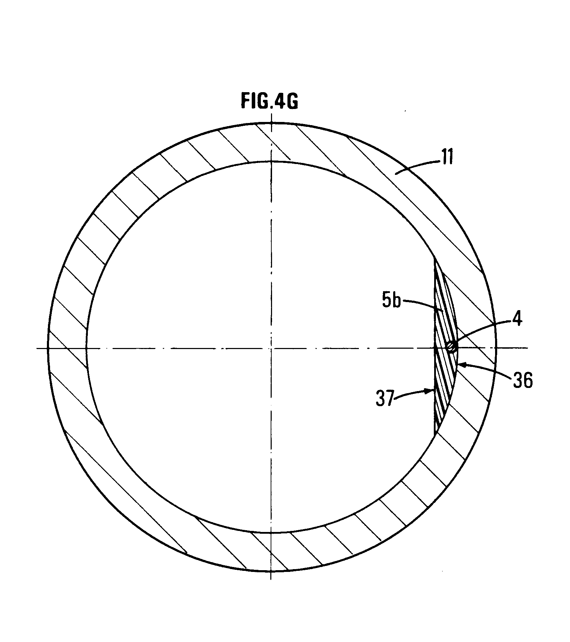

La figure 4G est une section de la conduite dans sa longueur courante. Le support 5b, qui contient le conducteur électrique 4, soit noyé, soit placé dans une gorge de ce support, comporte une surface osculatrice ou convexe 36 coopérant avec la surface interne de la conduite pour assurer le maintien du support et du conducteur dans la conduite, et comporte une surface galbée ou concave 37 définissant les nouveaux contours de la section de passage de l'élément de conduite comportant ledit support. Les surfaces convexe et concave sont dites complémentaires l'une de l'autre non pas parce qu'elles sont en contact l'une avec l'autre mais parce qu'elles appartiennent à un même élément.

Une surface galbée plane, telle que représentée sur la figure 4G, offre l'avantage, d'une part, de ne pas posséder de proéminence dont l'existence en présence notamment de transfert de matériels tournant à l'intérieur de la conduite faciliterait la détérioration du support et son enlèvement de la conduite et, d'autre part, de ne pas trop réduire la section de passage de la conduite.

La section du support 5b pourrait aussi avoir la forme d'un ménisque dont la face concave a un rayon plus petit ou plus grand que celui de la face convexe.

Selon la forme du conducteur (ou des conducteurs) qui peut être de section circulaire, carrée, rectangulaire, applatie, galbée, et est réalisé par exemple dans la masse ou en tresse, le support peut revêtir de nombreuses formes qui sont, d'une part, adaptées à coopérer avec une partie de la surface intérieure conduite vis à vis, et/ou, qui sont d'autre part adaptées à structurer l'écoulement de fluide, par exemple en adaptant les formes et les matériaux pour réduire les pertes de charge, et enfin éventuellement adaptées aux passages de pièces, tels des outils, des instruments, ou des câbles.

La matière du support 5b, qui peut être un matériau isolant, par exemple lorsque le conducteur est à nu, peut être un matériau plastique stabilisable par un processus physique ou chimique, tel que fusion avec refroidissement, réticulation, ou vulcanisation.

Ces matériaux peuvent être, par exemple des matériaux thermoplastiques, des matériaux thermodurcissables, ou des élastomères. Ces derniers ont notamment l'avantage de pouvoir présenter une bonne résistance à l'usure abrasive.

Selon le procédé de mise en place du support, on pourra utiliser des supports en matériau non encore stabilisé, partiellement stabilisé, entièrement stabilisé, ou comportant des parties différemment stabilisées.

Ainsi, comme il sera décrit ci-après dans le procédé préféré de mise en place de pièces à l'intérieur d'une conduite, le support contenant le conducteur est en matériau suffisamment stabilisé (voire complètement) pour ne pas être malheureusement déformé sous l'action de moyen de dilatation et pourra être recouvert sur sa surface convexe du même matériau, mais cru pour permettre l'accrochage du support à la partie de l'élément de conduite.

Le support 5b pourra aussi être utilisé, par exemple selon une configuration analogue à celle décrite, pour maintenir un conducteur hydraulique ou pneumatique ou toutes pièces mécaniques devant être placées au voisinage de la paroi intérieure d'un corps creux.

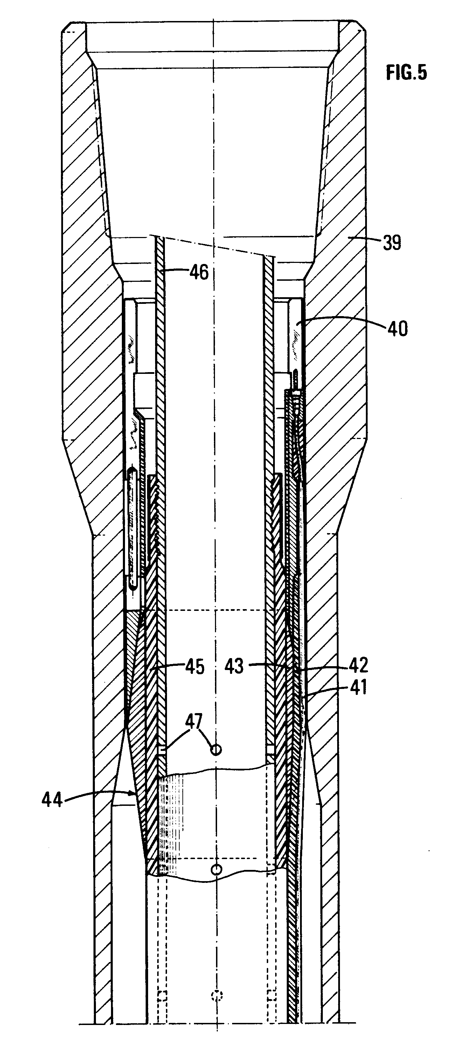

La figure 5 montre l'appareillage permettant la mise en place du support 42 de conducteur 41 ainsi que l'élément de liaison mécanique 43 entre le support 42 et le connecteur 40 à l'intérieur de la conduite 39.

L'appareillage comporte une enveloppe 45 extensible reposant dans une position rétractée sur un tube rigide 46 percé d'orifices 47 situés en face des parties de l'enveloppe devant être dilatées. L'enveloppe 45 et le tube 46 forment un volume clos possédant une ouverture reliée à des moyens de dilatation comportant un générateur de fluide sous pression adaptés à gonfler l'enveloppe de manière à pouvoir positionner le support sur la partie de la surface intérieure de la conduite. La surface concave du support peut être avantageusement positionnée et maintenue sur la surface extérieure de l'enveloppe avant que cette dernière soit gonflée, mais il est possibble d'avoir préliminairement placés le support ou toute autre pièce dans la conduite ou toute forme creuse, avant que l'enveloppe ne les maintienne.

La surface convexe du support peut être recouverte d'un mastic, d'une colle ou d'un élastomère cru pour permettre l'adhésion du support sur la partie de la surface intérieure de la conduite.

On peut aussi par exemple utiliser un matériau thermoplastique ou thermocurcissable adapté à produire les mêmes effets.

On pourra, pour réaliser l'adhésion de la pièce sur la partie de conduite, utiliser toute matière adhésive adaptée et l'on pourra aussi préparer la surface de la conduite par tout traitement approprié, tel que sablage, ou réalisation d'une précouche.

Pour certains éléments de conduite de forage déjà revêtus d'une résine, tel que "tube-kote coating" qui est une marque déposée par la Société AMF Tuboscope, on pourra pour conserver ce revêtement choisir une matière adhésive appropriée.

Selon le mode de réalisation préféré, la matière adhésive est un élastomère cru du même type que celui utilisé pour le support. Celui-ci, placé sur la surface convexe du support, est vulcanisé grâce au fluide de dilatation de l'enveloppe qui est en l'occurence de la vapeur d'eau de manière que l'adhésion puisse se faire par chauffage.

Les connecteurs 40 aux extrémités du système de liaison électrique comportant un conducteur 41 et un support 42, ainsi que la liaison mécanique 43 entre chacun des connecteurs 40 et le support 42, sont disposés sur l'enveloppe 45 rétractée sur le tube de rigidification 46.

Le support et la liaison sont alors enduits de matière adhérente.

L'appareillage ainsi agencé est introduit dans la conduite 40 dans laquelle il coulisse. L'enveloppe est dilatée et chauffée de manière à appliquer le support 42 du conducteur et la liaison 44 contre la partie intérieure de la conduite.

La mise en oeuvre du procédé de mise en place dans une position déterminée d'une pièce au support 8b comportant le conducteur 4,41 sur une partie de la surface intérieure de la conduite 11, 35, s'effectue comme suit :

- on place et on maintient sur une surface extérieure d'une enveloppe 45 extensible adaptée à coulisser dans ladite conduite 11, 39, la surface concave 37 de ladite pièce 5b, 42, suivant un agencement permettant d'atteindre ladite position déterminée,
- on introduit ladite enveloppe munie de ladite pièce à l'intérieur de ladite conduite 11, 39,
- on procède à la dilatation de ladite enveloppe de manière à appliquer ladite surface convexe contre ladite partie de la conduite,
- on réalise l'adhésion de ladite surface convexe 36 sur ladite partie.

On pourra placer au moins un connecteur 12, 15, à l'une des extrémités de la pièce, le connecteur étant connecté au conducteur, avant que l'enveloppe 45 soit introduite dans la conduite 11.

Lorsque cette pièce est déformable, la surface convexe ayant initialement une forme permettant à la pièce de pénétrer dans la conduite et ayant après une déformation une forme permettant à la surface convexe de coopérer avec la partie de la conduite, on pourra procéder au cours de la dilatation de ladite enveloppe, à ladite déformation de ladite pièce.

On pourra enduire la partie de la surface intérieur de la conduite et/ou la surface convexe de la pièce, d'une matière adhésive adaptée à réaliser en service le maintien de la pièce sur la partie.

Avant d'enduire la partie ou la surface convexe ou d'introduire la pièce dans la conduite, on pourra réaliser un traitement de surface améliorant l'adhérence de la pièce dans la conduite, tel un traitement mécanique ou chimique.

## Revendications

1. Ensemble permettant de réaliser au moins une liaison électrique à travers une conduite formée d'éléments fixés les uns aux autres, chaque élément possédant une première extrémité et une deuxième extrémité, adaptées à coopérer mécaniquement avec les extrémités complémentaires des éléments voisins, comportant en combinaison par élément de conduite :

   - un conducteur (4) placé à l'intérieur dudit élément,
   - un premier connecteur simple (12) fixé à une extrémité (4a) dudit conducteur (4) qui est maintenu dans la première extrémité dudit élément de conduite et qui coopère électriquement avec ladite extrémité (4a) dudit conducteur (4),
   - un deuxième connecteur simple (15) fixé à l'autre extrémité (4b) dudit conducteur (4) qui est maintenu dans la deuxième extrémité dudit élément de conduite et qui coopère électriquement avec ladite extrémité (4b) dudit conducteur (4),
   - un premier connecteur double (13) possédant une première extrémité qui comprend au moins un contact (20b) et une deuxième extrémité comportant au moins un contact annulaire (18) relié électriquement au précédent, la première extrémité dudit premier connecteur double (13) coopérant électriquement avec le premier connecteur simple (12), la deuxième extrémité dudit premier connecteur double (13) coopérant électriquement avec une deuxième extrémité d'un deuxième connecteur double (14) d'un élément de conduite voisin,

- un deuxième connecteur double identique audit deuxième connecteur double (14) d'un élément de conduite voisin, possédant une première extrémité qui comprend au moins un contact (19b), et une deuxième extrémité comportant au moins un contact annulaire (21) relié électriquement au précédent, la première extrémité dudit deuxième connecteur double coopérant électriquement avec le deuxième connecteur simple (15),
- Lesdits connecteurs doubles étant éventuellement extractibles et ladite coopération électrique entre lesdits deux connecteurs doubles se faisant par lesdits contacts annulaires (18, 21) et,
- des moyens de positionnement et de fixation (25a, 25d, 26a, 26d) des connecteurs simples (12, 15).

2. Ensemble selon la revendication 1, caractérisé en ce que le premier (12) et/ou le deuxième (15) connecteur simple comporte une couronne radialement déformable et des moyens de déformation de ladite couronne permettant l'ancrage de ladite couronne dudit connecteur avec les extrémités (10, 11) dudit élément de conduite.

3. Ensemble selon la revendication 2, caractérisé en ce que les moyens de déformation comportent une goupille (26a, 26d) possédant sur une certaine longueur une forme conique coopérant avec un alésage placé dans l'épaisseur de ladite couronne, ladite couronne étant fendue (25a, 25d) dans toute son épaisseur sur une partie au moins de sa longueur.

4. Ensemble selon l'une des revendications 1 à 3, caractérisé en ce qu'un connecteur double associé à un connecteur simple comporte des moyens de centrage et de retenue en translation par rapport audit connecteur.

5. Ensemble selon la revendication 4, caractérisé en ce que lesdits moyens de centrage (31d) et de retenue comportent un alésage muni d'une gorge (30a, 30d) coopérant avec une douille munie d'au moins une griffe élastique (29a, 29d).

6. Ensemble selon l'une des revendications 1 à 5, caractérisé en ce que le connecteur simple et le connecteur double associé comportent des moyens d'orientation, de l'un par rapport à l'autre, tels une clavette (31d) portée par le connecteur double, ladite clavette coopérant avec une rainure (32d) située dans ledit connecteur simple.

7. Ensemble selon l'une des revendications 1 à 6, caractérisé en ce que ladite liaison électrique comporte entre le connecteur simple et le connecteur double associé, un contacteur électrique, tel un monocontacteur, comportant deux éléments complémentaires (20a, 20b, 19a, 19b) adaptés à réaliser une connexion électrique, chacun desdits éléments étant disposé à la périphérie du connecteur simple et du connecteur double associé, les axes desdits éléments étant confondus et parallèles à l'axe de l'ensemble, lesdits deux éléments dudit contacteur coopérant électriquement lors de la fixation du connecteur double associé.

8. Ensemble selon l'une des revendications 1 à 7, caractérisé en ce que la deuxième extrémité dudit premier connecteur double (13) comporte un contact annulaire extérieur (18), et en ce que la deuxième extrémité dudit deuxième connecteur double (14) comporte un contact annulaire intérieur (21), chacun des deux contacts porté par chacune des extrémités étant adapté à coopérer électriquement avec les contacts portés par les extrémités complémentaires des éléments voisins.

9. Ensemble selon la revendication 8, caractérisé en ce que l'une ou l'autre desdites deuxièmes extrémités desdits connecteurs doubles comporte un racleur (33, 34) permettant un essuyage et une étanchéité du contact électrique entre les deux dites extrémités.

10. Ensemble selon les revendications 1 à 9, caractérisé en ce qu'au moins l'une desdites deuxièmes extrémités de l'un desdits connecteurs doubles comporte un support dudit contact annulaire, ledit support est réalisé en élastomère et comporte un élément de renfort.

11. Ensemble selon l'une des revendications 1 à 10, caractérisé en ce que l'une au moins des extrémités de ladite conduite comporte une cavité intérieure à ladite conduite et extérieure à la deuxième extrémité d'un connecteur double, et comporte une liaison hydraulique (24a, 24b, 24c, 24d), ladite liaison hydraulique reliant ladite cavité à l'intérieur dudit connecteur double, ladite liaison étant adaptée à réaliser l'équilibrage de ladite connexion entre deux éléments de conduite voisins.

12. Ensemble selon l'une des revendications 1 à 11, caractérisé en ce que la connexion de la deuxième extrémité dudit premier connecteur double avec la deuxième extrémité dudit deuxième connecteur double de l'élément de conduite voisin, délimite deux surfaces en contact, et en ce que lesdites surfaces sont réalisées dans des matériaux adaptés à résister à l'usure.

13. Ensemble selon l'une des revendications 1 à 12, caractérisé en ce que ledit conducteur (4) est maintenu à l'intérieur dudit élément de conduite par un support (5b).

**Claims**

1. An assembly enabling at least one electrical connection to be made through a pipe formed of elements fixed together, each element having a first end and a second end, adapted to cooperate mechanically with the complementary ends of the adjacent elements, comprising per pipe element a combination of:
   - a conductor (4) placed inside the element,
   - a first single connector (12) fixed to one end (4a) of the conductor (4), which is held in position in the first end of the pipe element and which co-operates electrically with the end (4a) of the conductor (4),
   - a second single connector (15) fixed to the other end (4b) of the conductor (4) which is held in position in the second end of the pipe element and which cooperates electrically with the end (4b) of the conductor (4),
   - a first double connector (13) having a first end which comprises at least one contact (20b) and a second end comprising at least one annular contact (18) electrically connected to the previous end, the first end of the first double connector (13) co-operating electrically with the first single connector (12), the second end of the first double connector (13) co-operating electrically with a second end of a second double connector (14) of an adjacent pipe element,
   - a second double connector identical to the above-mentioned second double connector (14) of an adjacent pipe element, having a first end which comprises at least one contact (19b) and a second end comprising at least one annular contact (21) electrically connected to the preceding end, the first end of the second double connector electrically co-operating with the second single connector (15),
   - the double connectors being possibly detachable and electrical co-operation between the two double connectors being effected by the annular contacts (18, 21), and
   - means for positioning and fixing (25a, 25d, 26a, 26d) the single connectors (12, 15).

2. An assembly in accordance with claim 1, characterised in that the first (12) and/or second (15) single connector has a radially deformable ring and means for deforming the ring so as to enable anchoring of the ring of the connector with the ends (10, 11) of the pipe element.

3. An assembly in accordance with claim 2, characterised in that the deforming means comprise a pin (26a, 26d) tapering over a certain length, co-operating with a bore placed in the thickness of the ring, the ring being slit (25a, 25d) throughout its thickness over at least a section of its length.

4. An assembly in accordance with one of claims 1 to 3, characterised in that one double connector associated with a single connector has means for centring and resisting translation in relation to the connector.

5. An assembly in accordance with claim 4, characterised in that the centring (31d) and resistance means have a bore fitted with a groove (30a, 30d) co-operating with a socket fitted with at least one resilient claw (29a, 29d).

6. An assembly in accordance with one of claims 1 to 5, characterised in that the single connector and the associated double connector comprise means for orienting the one in relation to the other, such as a key (31d) carried by the double connector, the key co-operating with a groove (32d) located in the single connector.

7. An assembly in accordance with one of claims 1 to 6, characterised in that the electrical connection has between the single connector and the associated double connector an electrical contactor, such as a mono-contactor, comprising two complementary elements (20a, 20b, 19a, 19b) adapted so as to make an electrical connection, each of the elements being disposed on the periphery of the single connector and the associated double connector, the axis of the elements being merging and parallel with the axis of the assembly, the two elements of the contactor co-operating electrically when the associated double connector is fixed.

8. An assembly in accordance with one of claims 1 to 7, characterised in that the second end of the first double connector (13) has an exterior annular contact (18) and in that the second end of the second double connector (14) has an interior annular contact (21), each of these two contacts carried by each of the ends being adapted to co-operate electrically with the contacts carried by the complementary ends of the adjacent elements.

9. An assembly in accordance with claim 8, characterised in that one or other of the second ends of the double connectors has a scraper (33, 34) for wiping and sealing the electrical contact between the two ends.

10. An assembly in accordance with claims 1 to 9, characterised in that at least one of the second ends of one of the double connectors has a support for the annular contact, the support being made of elastomer and having an reinforcement element.

11. An assembly in accordance with one of claims 1 to 10, characterised in that at least one of the ends of the pipe has a cavity inside the pipe and outside the second end of a double connector and has a hydraulic connection (24a, 24b, 24c, 24d), the hydraulic connection linking the cavity to the interior of the double connector, wherein the connection is adapted to provide balancing of the connection between two adjacent pipe elements.

12. An assembly in accordance with one of claims 1 to 11, characterised in that the connection of the second end of the first double connector with the second end of the second double connector of the adjacent pipe element delineates two surfaces in contact and in that the surfaces are made of suitable wear-resistant materials.

13. An assembly in accordance with one of claims 1 to 12, characterised in that the conductor (4) is held in position inside the pipe element by a support (5b).

**Patentansprüche**

1. Anordnung zur Verwirklichung wenigstens einer elektrischen Verbindung quer durch einen von aneinander befestigten Elementen gebildeten Rohrstrang, wobei jedes Element ein erstes Ende und ein zweites Ende besitzt, die ausgebildet sind, um mechanisch mit den komplementären Enden der benachbarten Elemente zusammenzuwirken, umfassend in Kombination eines Rohrstrangelements:

- einen im Inneren des genannten Elements angeordneten Stromleiter (4),
- ein erstes Einfach-Verbindungsstück (12), das an einem Ende (4a) des genannten Stromleiters (4) befestigt ist, welches in dem ersten Ende des genannten Rohrstrangelements gehalten ist und welches elektrisch mit dem genannten Ende (4a) des genannten Stromleiters (4) zusammenwirkt,
- ein zweites Einfach-Verbindungsstück (15), das an dem anderen Ende (4b) des genannten Stromleiters (4) befestigt ist, welches in dem zweiten Ende des genannten Rohrstrangelements gehalten ist und welches elektrisch mit dem genannten Ende (4b) des genannten Stromleiters (4) zusammenwirkt,
- ein erstes Zweifach-Verbindungsstück (13), das ein erstes Ende, welches wenigstens einen Kontakt (20b) umfaßt, und ein zweites Ende besitzt, das wenigstens einen ringförmigen Kontakt (18) umfaßt, der mit dem vorhergehenden elektrisch verbunden ist, wobei das erste Ende des genannten ersten Zweifach-Verbindungsstücks (13) mit dem ersten Ein-fach-verbindungsstück (12) elektrisch zusammenwirkt und das zweite Ende des genannten ersten Zweifach-Verbindungsstücks (13) mit einem zweiten Ende von einem zweiten Zweifach-Verbindungsstück (14) eines benachbarten Rohrstrangelements elektrisch zusammenwirkt,
- ein zweites Zweifach-Verbindungsstück, das zu dem zweiten Zweifach-Verbindungsstück (14) von einem benachbarten Rohrstrangelement identisch ist sowie ein erstes Ende, welches wenigstens einen Kontakt (19b) umfaßt, und ein zweites Ende besitzt, das wenigstens einen ringförmigen Kontakt (21) aufweist, der mit dem vorhergehenden elektrisch verbunden ist, wobei das erste Ende des genannten zweiten Zweifach-Verbindungsstücks mit dem zweiten Einfach-Verbindungsstück (15) elektrisch zusammenwirkt,
- die genannten Zweifach-Verbindungsstücke möglicherweise ausziehbar sind und die genannte elektrische Zusammenwirkung zwischen den genannten beiden Zweifach-Verbindungsstücken über die genannten ringförmigen Kontakte (18, 21) erfolgt, und

- Positionierungs- und Befestigungseinrichtungen (25a, 25d, 26a, 26d) der Einfach-Verbindungsstücke (12, 15).

2. Anordnung nach Anspruch 1, **dadurch gekennzeichnet,** daß das erste (12) und/oder das zweite (15) Einfach-Verbindungsstück eine radial verformbare Krone und Verformungseinrichtungen der genannten Krone zur Verankerung der genannten Krone des genannten Verbindungsstücks mit den Enden (10, 11) des genannten Rohrstrangelements umfaßt.

3. Anordnung nach Anspruch 2, **dadurch gekennzeichnet,** daß die Verformungseinrichtungen einen Stift (26a, 26d) umfassen, der auf einer bestimmten Länge eine konische Form aufweist und mit einer in der Dicke der genannten Krone angeordneten Bohrung zusammenwirkt, wobei die genannte Krone in ihrer ganzen Dicke über einen Teil wenigstens ihrer Länge geschlitzt ist (25a, 25d).

4. Anordnung nach einem der Ansprüche 1 bis 3, **dadurch gekennzeichnet,** daß ein mit einem Einfach-Verbindungsstück verbundenes Zweifach-Verbindungsstück Zentrierungsund Halterungseinrichtungen bei Verschiebung in bezug auf das genannte Verbindungsstück umfaßt.

5. Anordnung nach Anspruch 4, **dadurch gekennzeichnet,** daß die genannten Zentrierungs- (31d) und Halterungseinrichtungen eine mit einer Vertiefung (30a, 30d) versehene Bohrung umfassen, die mit einer mit wenigstens einem elastischen Haken (29a, 29d) versehenen Hülse zusammenwirkt.

6. Anordnung nach einem der Ansprüche 1 bis 5, **dadurch gekennzeichnet,** daß das Einfach-Verbindungsstück und das verbundene Zweifach-Verbindungsstück Ausrichtungseinrichtungen für das eine in bezug auf das andere, so einen von dem Zweifach-Verbindungsstück getragenen Keil (31d), der mit einer in dem genannten Einfach-Verbindungsstück angeordneten Nut (32d) zusammenwirkt, umfassen.

7. Anordnung nach einem der Ansprüche 1 bis 6, **dadurch gekennzeichnet,** daß die elektrische Verbindung zwischen dem Einfach-Verbindungsstück und dem verbundenen Zweifach-Verbindungsstück einen elektrischen Einschalter, so einen Monoeinschalter, umfassen, der zwei komplementäre Elemente (20a, 20b, 19a, 19b) zur Verwirklichung einer elektrischen Verbindung aufweist, wobei jedes der genannten Elemente am Umfang des Einfach-Verbindungsstücks und des verbundenen Zweifach-Verbindungsstücks angeordnet ist, die Achsen der genannten Elemente zusammenfallen und parallel zu der Achse der Anordnung sind und die genannten beiden Elemente des genannten Einschalters zur Zeit der Befestigung des verbundenen Zweifach-Verbindungsstücks elektrisch zusammenwirken.

8. Anordnung nach einem der Ansprüche 1 bis 7, **dadurch gekennzeichnet,** daß das zweite Ende des genannten ersten Zweifach-Verbindungsstücks (13) einen ringförmigen äußeren Kontakt (18) umfaßt und daß das zweite Ende des genannten zweiten Zweifach-Verbindungsstücks (14) einen ringförmigen inneren Kontakt (21) umfaßt, wobei jeder der beiden Kontakte von jedem der Enden getragen ist, welche ausgestaltet sind, um mit den von den komplementären Enden der benachbarten Elemente getragenen Kontakten elektrisch zusammenzuwirken.

9. Anordnung nach Anspruch 8, **dadurch gekennzeichnet,** daß das eine oder das andere der genannten zweiten Enden der genannten Zweifach-Verbindungsstücke einen Abstreifer (33, 34) für ein Abwischen und eine Dichtigkeit des elektrischen Kontaktes zwischen den beiden genannten Enden umfaßt.

10. Anordnung nach den Ansprüchen 1 bis 9, **dadurch gekennzeichnet,** daß wenigstens der eine der genannten zweiten Enden von dem einen der Zweifach-Verbindungsstücke einen Träger des genannten ringförmigen Kontaktes umfaßt, wobei der genannte Träger aus einem Elastomer besteht und ein Verstärkungselement aufweist.

11. Anordnung nach einem der Ansprüche 1 bis 10, **dadurch gekennzeichnet,** daß das eine wenigstens der Enden des genannten Rohrstranges einen zu dem genannten Rohrstrang innen liegenden und zu dem zweiten Ende des einen Zweifach-Verbindungsstücks außen liegenden Hohlraum sowie eine hydraulische Verbindung (24a, 24b, 24c, 24d) umfaßt, wobei die genannte hydraulische Verbindung den genannten Hohlraum mit dem Inneren des genannten Zweifach-Verbindungsstücks verbindet und angepaßt ist, um den Ausgleich von der genannten Verbindung zwischen zwei benachbarten Rohrstrangelementen zu verwirklichen.

**12.** Anordnung nach einem der Ansprüche 1 bis 11, **dadurch gekennzeichnet,** daß die Verbindung von dem zweiten Ende des genannten ersten Zweifach-Verbindungsstücks mit dem zweiten Ende des genannten zweiten Zweifach-Verbindungsstücks von dem benachbarten Rohrstrangelement zwei Kontaktflächen begrenzt und daß die genannten Flächen aus Materialien bestehen, die angepaßt sind, um dem Verschleiß zu widerstehen.

**13.** Anordnung nach einem der Ansprüche 1 bis 12, **dadurch gekennzeichnet,** daß der genannte Stromleiter (4) im Inneren des genannten Rohrstrangelements durch einen Träger (5b) gehalten ist.

**FIG.1**

## FIG.2A

**FIG.2B**

**FIG.2C**

**FIG.3**

**FIG.4A**

**FIG.4B**

**FIG.4C**

31d  32d

29d

17b

24d

11

13

12

20b

**FIG.4D**

12

17a

26d

25d

35

4

11

**FIG.4E**

**FIG.4F**

### FIG.4G

FIG.5